## Europäisches Patentamt

## European Patent Office

## Office européen des brevets

(19)

(11) Veröffentlichungsnummer: **0 033 865**
**B1**

(12) **EUROPÄISCHE PATENTSCHRIFT**

(45) Veröffentlichungstag der Patentschrift:
29.06.83

(51) Int. Cl.³: **F 02 N 17/00**

(21) Anmeldenummer: **81100376.3**

(22) Anmeldetag: **20.01.81**

(54) **Stop-Start-Vorrichtung für einen Fahrzeug-Verbrennungsmotor.**

(30) Priorität: **12.02.80 DE 3005100**

(43) Veröffentlichungstag der Anmeldung:
**19.08.81 Patentblatt 81/33**

(45) Bekanntmachung des Hinweises auf die Patenterteilung:
**29.06.83 Patentblatt 83/26**

(84) Benannte Vertragsstaaten:
**FR GB IT SE**

(56) Entgegenhaltungen:
**DE-A-2 351 121**
**DE-A-2 540 081**

(73) Patentinhaber: **AUDI NSU AUTO UNION Aktiengesellschaft, Postfach 220 Ettingerstrasse, D-8070 Ingolstadt (DE)**

(72) Erfinder: **Pagel, Ernst-Olav, Dr., Bergstrasse 5, D-8079 Böhmfeld (DE)**
Erfinder: **Euringer, Robert, Haus Nr. 80, D-8421 Biber (DE)**

ACTORUM AG

## Stop-Start-Vorrichtung für einen Fahrzeugverbrennungsmotor

Die Erfindung betrifft eine Stop-Start-Vorrichtung für einen Fahrzeugverbrennungsmotor nach dem Gattungsbegriff des Anspruchs 1.

Bei einer bekannten gattungsgemässen Stop-Start-Vorrichtung (DE-AS Nr. 2332627) ist es möglich, den Verbrennungsmotor über die Starttaste nach einem Einschalten der Zündung und nachfolgender Betätigung der Stoptaste anzulassen. Da die Stoptaste bei solchen Stop-Start-Vorrichtungen, die insbesondere zum bequemen und kurzzeitigen Unterbrechen des Betriebs des Verbrennungsmotors, beispielsweise bei Verkehrsstauungen, dienen sollen, möglichst gut zugänglich angeordnet ist, besteht bei der bekannten Stop-Start-Vorrichtung die Gefahr, dass ein auf einem Hof abgestelltes Fahrzeug, bei welchem die Zündung eingeschaltet ist, unbeabsichtigt durch Betätigen der Starttaste, die beispielsweise durch das Gaspedal gebildet sein kann, angelassen wird. Ein solches durch Unachtsamkeit hervorgerufenes Anlassen kann zu gefährlichen Folgen führen. Eine weitere Gefahr besteht darin, dass das Fahrzeug mit abgestelltem Motor rollt, z.B. bei Stauungen auf bergab führenden Strecken. Für eine Servobremse steht dann keine Fremdenergie zur Verfügung, was zu gefährlichen Zuständen führen kann.

Der Erfindung liegt die Aufgabe zugrunde, eine gattungsgemässe Stop-Start-Vorrichtung derart weiterzubilden, dass ein weitgehend sicherer Betrieb eines damit ausgerüsteten Fahrzeugs gewährleistet ist.

Diese Aufgabe wird mit den Merkmalen des Anspruchs 1 gelöst.

Bei der erfindungsgemässen Stop-Start-Vorrichtung ist ein Anlassen des Verbrennungsmotors über die Starttaste somit erst möglich, wenn der Motor nach Betätigen des Zündschlüssels einmal gelaufen ist, d.h. entweder mit Hilfe des üblicherweise vorgesehenen Anlasserschalters manuell gestartet oder angeschoben wurde. Der Fahrzeuginsasse rechnet dann mit der Betriebsbereitschaft der Stop-Start-Vorrichtung, was ein versehentliches oder unerwünschtes Anlassen des Verbrennungsmotors weitgehend ausschliesst.

Der Anspruch 2 kennzeichnet eine vorteilhafte Ausführungsform der erfindungsgemässen Stop-Start-Vorrichtung.

Mit den Merkmalen des Anspruchs 3 wird erreicht, dass die Starttaste erst dann zum Anlassen des Verbrennungsmotors wirksam ist, wenn dieser tatsächlich steht. Der Anlasser bleibt dann höchstens so lange in Betrieb, bis der Verbrennungsmotor die für die Betätigung des Motorbetriebserkennungsschalters notwendige Drehzahl erreicht hat, d.h. der Motor sicher angesprungen ist. Bei der bekannten Vorrichtung, bei der nur ein einziger Motorbetriebserkennungsschalter vorgesehen ist, muss bei Betätigung dieses Erkennungsschalters der Motor auf einer gewissen Drehzahl sein, damit der Anlasser bis zum Erreichen dieser Drehzahl sicher wirksam ist. Damit aber ist es möglich, den Anlasser unterhalb dieser Drehzahl bereits zu betätigen, wenn der Motor noch nicht zum Stillstand gekommen ist, was zur Beschädigung des Anlassers führen kann.

Die bekannte Vorrichtung ist derart aufgebaut, dass die Starttaste nur innerhalb eines bestimmten Zeitintervalls wiederholt betätigt werden kann, wenn der Motor nach einem Anlassen nicht angesprungen ist. Ausserhalb dieses Zeitintervalls ist für ein erneutes Betätigen der Starttaste eine Betätigung der Stoptaste erforderlich. Mit den Merkmalen des Anspruchs 4 wird erreicht, dass der Motor, wenn nur einmal bei eingeschalteter Zündung der für die Betätigung des Motorbetriebserkennungsschalters erforderliche Betriebszustand vorgeherrscht hat, der Motor wiederholt mittels der Starttaste angelassen werden kann.

Die Ansprüche 5 und 6 kennzeichnen eine Variante und eine Ausführungsform, bei welcher der Motor nach Ausserbetriebsetzen über die Stoptaste selbsttätig angelassen wird, sobald das Fahrzeug rollt.

Die Erfindung wird im folgenden anhand einer schematischen Zeichnung beispielsweise und mit weiteren Einzelheiten erläutert.

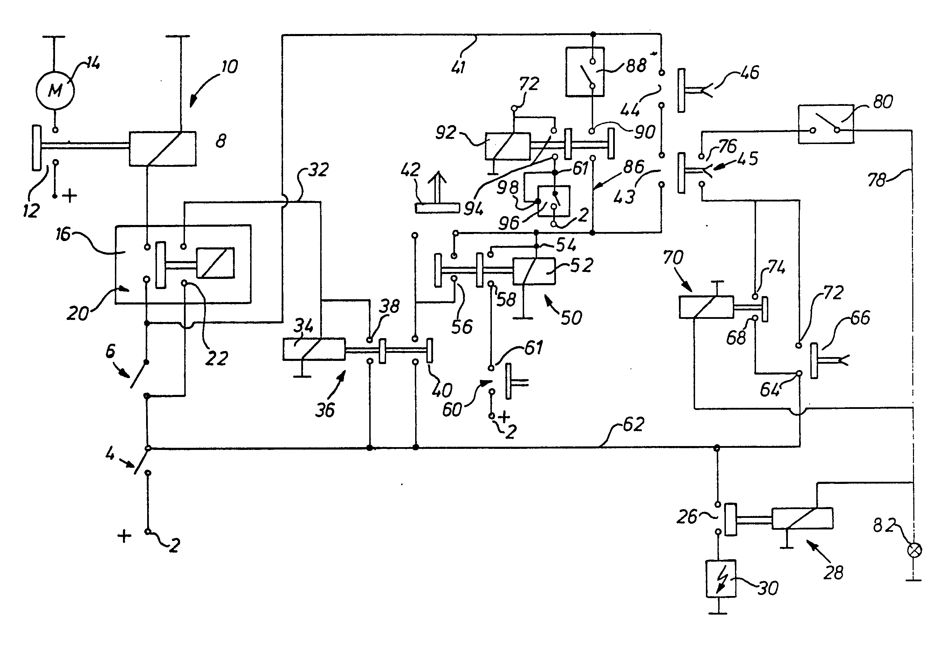

Die einzige Figur zeigt einen Schaltplan eines Ausführungsbeispiels der Stop-Start-Vorrichtung.

Gemäss der Figur ist ein mit einem positiven Pol 2 einer Fahrzeugbatterie verbundener Zündschalter 4 in Reihe mit einem Anlassschalter 6 und einem Elektromagneten 8 eines Anlasserrelais 10 geschaltet. Bei Erregung des Elektromagneten 8 schliesst ein Kontaktsatz 12 des Anlasserrelais 10 einen Stromkreis, in dem sich ein Anlasser 14 befindet, solange ein erster Kontaktsatz 16 eines Motorbetriebserkennungsschalters 20 geschlossen ist, welcher zwischen dem Anlassschalter 6 und dem Elektromagneten 8 angeordnet ist. Die Funktion des Motorbetriebserkennungsschalters 20 ist derart, dass unterhalb einer vorbestimmten Drehzahl, beispielsweise 500 min$^{-1}$, der Brennkraftmaschine der erste Kontaktsatz 16 geschlossen und ein zweiter Kontaktsatz 22 geöffnet ist, während oberhalb der vorbestimmten Drehzahl der erste Kontaktsatz 16 geöffnet und der zweite Kontaktsatz 22 geschlossen ist. Mit dem ersten Kontaktsatz 16 des Motorbetriebserkennungsschalters 20 wird erreicht, dass der Anlasser 14 selbsttätig abgeschaltet wird, sobald die Brennkraftmaschine die vorbestimmte Drehzahl erreicht hat.

Dem Zündschalter 4 nachgeschaltet ist über normalerweise geschlossene Kontakte 26 eines Unterbrechungsrelais 28 eine Zündschaltung 30 oder Kraftstoffversorgung der Brennkraftmaschine. Die Zündschaltung 30 und der Motorbetriebserkennungsschalter 20 sind in ihrem Aufbau an sich bekannt und werden daher nicht im einzelnen erläutert.

Einer der Kontakte des zweiten Kontaktsatzes 22 des Motorbetriebserkennungsschalters 20 ist über den Zündschalter 4 mit dem positiven Pol 2 der Batterie verbunden, der andere Kontakt ist über eine Leitung 32 mit dem Elektromagneten 34 eines Bereitschaftsrelais 36 mit Selbsthaltekontakten 38 und einem weiteren Kontaktsatz 40 verbunden.

Der Kontaktsatz 40 liegt in einem Stromkreis 41, welcher parallel zum Anlassschalter 6 liegt und einen Öldruckschalter 42 sowie zwei weitere Kontaktsätze 43 und 44 enthält, welche einem Gaspedal 45 und einem Kupplungspedal 46 zugeordnet sind.

Der Öldruckschalter 42 öffnet oberhalb einer Drehzahl von beispielsweise 50 min⁻¹ der Brennkraftmaschine, welche unter der Drehzahl liegt, bei der der Motorbetriebserkennungsschalter 20 öffnet. Der Kontaktsatz 43 ist bei betätigtem Gaspedal 45 geschlossen. Der Kontaktsatz 44 ist bei betätigtem Kupplungspedal 46 geschlossen.

Zur Überbrückung des Öldruckschalters 42 ist ein Überbrückungsrelais 50 vorgesehen, dessen Elektromagnet 52 über eine Leitung 54 mit dem vom Halterelais 36 abgewandten Kontakt des Öldruckschalters 42 und mit Masse verbunden ist. Ein erster Kontaktsatz 56 schliesst bei erregtem Elektromagneten 52 einen den Öldruckschalter 42 umgehenden Strompfad. Ein zweiter Kontaktsatz 58 schliesst bei erregtem Elektromagneten 52 einen Strompfad, welcher den Elektromagneten über einen ähnlich dem Kontaktsatz 20 unter der vorbestimmten Drehzahl geschlossenen weiteren Kontaktsatz 60 des Motorbetriebserkennungsschalters 20 mit dem positiven Pol 2 der nicht dargestellten Batterie verbindet.

Bei geschlossenem Zündschalter 4 verbindet eine Leitung 62 den positiven Pol 2 der Batterie mit einem Kontakt 64 einer Stoptaste 66 und einem Kontakt 68 eines Halterelais 70. Ein weiterer Kontakt 72 der Stoptaste 66 ist mit einem weiteren Kontakt 74 des Halterelais 70 und einem Kontakt eines weiteren, dem Gaspedal 45 zugeordneten Kontaktsatzes 76 verbunden, welcher im nicht betätigten Zustand des Gaspedals 45 geschlossen ist. Von dem Kontaktsatz 76 führt eine Leitung 78 über einen bei einem Stillstand des Fahrzeugs geschlossenen Schalter 80 an sich bekannter Bauart zu dem Elektromagneten des Halterelais 70 und des Unterbrecherrelais 28. Eine Lampe 82 ist zwischen die Leitungen 78 und Masse geschaltet.

Zur Überbrückung der Kontaktsätze 43 und 44 ist ein Strompfad 86 vorgesehen, welcher in Reihe einen bei einer Fahrzeuggeschwindigkeit z.B. über 4 km/h schliessenden Schalter 88 und einen Kontaktsatz 90 eines Relais 92 enthält. Der Schalter 88 schliesst vorteilhafterweise bei einer höheren Fahrzeuggeschwindigkeit als der Schalter 80 öffnet. Die Erregerwicklung des Relais 92 ist mit dem Kontakt 72 der Stoptaste und über Selbsthaltekontakte 94 mit einem Kontakt 61 des weiteren Kontaktsatzes 60 des Motorbetriebserkennungsschalters 20 verbunden. Der Kontakt 61 ist über einen Zeitschalter 96 mit dem positiven Pol 2 der nicht dargestellten Batterie verbunden. Der Zeitschalter 96 schliesst eine Verbindung zwischen dem Kontakt 61 und dem Pol 2 für eine vorbestimmte Zeitdauer, z.B. 5 s, wenn sein Eingang 98 mit positiver Spannung beaufschlagt ist.

Die Funktion der beschriebenen Anordnung ist folgende:

Es sei zunächst angenommen, dass der Motor steht und die Zündung ausgeschaltet ist, so dass alle Relais passiv sind.

Bei Schliessen des Zündschalters 4 wird die Zündschaltung 30 über die geschlossenen Kontakte 26 des Unterbrechungsrelais 28 in Betriebsbereitschaft versetzt.

Wird nun der Anlasserschalter 6 geschlossen, so wird über den geschlossenen Kontaktsatz 16 des Betriebserkennungsschalters 20 der Elektromagnet 8 des Anlasserrelais 10 erregt, wodurch dessen Kontaktsatz 12 schliesst und der Anlasser 14 anläuft. Sobald der Motor die für die Betätigung des Motorbetriebserkennungsschalters 20 nötige Drehzahl erreicht hat, öffnet der Kontaktsatz 16, wodurch der Anlasser 14 anhält. Gleichzeitig schliesst der Kontaktsatz 22, wodurch der Elektromagnet 34 des Bereitschaftsrelais 36 erregt wird und dieses über die Selbsthaltekontakte 38 in Selbsthaltung übergeht. Ebenfalls geschlossen wird der Kontaktsatz 40, so dass der den Anlassschalter 6 überbrückende Stromkreis 41 in Betriebsbereitschaft kommt. Die Selbsthaltung des Bereitschaftsrelais 36 hält an, bis der Zündschalter 4 abgeschaltet wird.

Soll nun der Motor beispielsweise an einer auf rot stehenden Ampel abgeschaltet werden, so muss bei stillstehendem Fahrzeug, also geschlossenem Schalter 80 und nicht betätigtem Gaspedal 45, also geschlossenem Kontaktsatz 76, die Stoptaste 66 gedrückt werden. Das Unterbrechungsrelais 28 wird dadurch erregt, so dass dessen Kontakte 26 öffnen und die Zündschaltung 30 abgeschaltet wird. Gleichzeitig wird das Halterelais 70 erregt, wodurch dessen Kontakte 68 und 74 überbrückt werden und die Stoptaste 66 überbrücken. Die Stoptaste 66 kann somit wieder losgelassen werden, ohne dass das Unterbrechungsrelais 28 abfällt. Die Lampe 82 leuchtet auf und zeigt den mittels der Stoptaste 66 unterbrochenen Betrieb des Motors an.

Wenn die Drehzahl des Motors unter die Drehzahl absinkt, bei der der Motorbetriebserkennungsschalter 20 aktiviert wird, öffnet der Kontaktsatz 22 und schliesst der Kontaktsatz 16. Auf die Erregung des Elektromagneten 34 des Bereitschaftsrelais 36 hat dies keinen Einfluss, da das Bereitschaftsrelais 36 über die Selbsthaltekontakte 38 in Selbsthaltung ist.

Bei einem Abfall der Drehzahl des Motors auf nahe Null schliesst der Öldruckschalter 42 und erregt dabei das Überbrückungsrelais 50, dessen Kontaktsätze 56 und 58 schliessen.

Soll der Motor nun erneut angelassen werden, müssen das Kupplungspedal 46 und das Gaspedal 45 gleichzeitig betätigt werden. Durch die Betätigung des Gaspedals 45 öffnet der Kontaktsatz 76, wodurch das Halterelais 70 und das Unterbrechungsrelais 28 abfallen und die Zündschaltung 30 aktiviert wird.

Bei betätigtem Kupplungspedal 46 und Gaspedal 45 wird das Anlasserrelais wie beim Betätigen des Anlassschalters 6 über den Öldruckschalter 42 bzw. den Kontaktsatz 56 sowie die Kontaktsätze 43 und 44 betätigt. Sobald der Motor die vorbestimmte Drehzahl erreicht hat und die Kontaktsätze 16 und 60 öffnen, endet der Betrieb des Anlassers 14 und die Selbsthaltung des Überbrückungsrelais 50, welches nach Öffnen des Öldruckschalters 42 über den Kontaktsatz 58 erregt ist.

Der Anlassvorgang kann durch Loslassen des Gaspedals 45 oder des Kupplungspedals 46 jederzeit unterbrochen werden.

Im folgenden wird die Funktion des Strompfades 86 erläutert:

Wenn die Stoptaste 66 bei laufendem Motor betätigt wird, wird das Relais 92 erregt und geht über die Selbsthaltekontakte 94 und zunächst den Zeitschalter 96 in Selbsthaltung. Die Haltezeit des Zeitschalters 96 ist ausreichend lang, damit der Motor zum Stillstand kommt, so dass der Kontakt 61 durch Schliessen des Kontaktsatzes 60 mit dem positiven Pol 2 verbunden wird und die Selbsthaltung andauert.

Wird nun das Fahrzeug in Bewegung gesetzt, z.B. an einem Gefälle, so öffnet der Schalter 80, wodurch die Zündschaltung 30 aktiviert wird. Anschliessend schliesst der Schalter 88, wodurch der Anlasser 14 betätigt wird bis der Motorbetriebserkennungsschalter 20 das Laufen des Motors signalisiert und der Kontaktsatz 60 öffnet. Dadurch erlischt die Selbsthaltung des Relais 92. Der Kontakt 61 und damit der Eingang 98 des Zeitschalters 96 werden spannungsfrei, der Zeitschalter ist bereit, bei einem erneuten Betätigen der Stoptaste 66 für eine vorbestimmte Zeitdauer zu schliessen.

Es versteht sich, dass der Schalter 88 mit dem Schalter 80 zu einem Schmitt-Trigger mit Hysterese zusammengefasst sein kann.

Die geschilderte Funktion des Strompfades 86 gewährleistet, dass das Fahrzeug nicht ohne laufenden Motor rollen kann, so dass die Energieversorgung, z.B. für Servopumpen u.a., ständig gewährleistet ist.

Der Motor kann bei leerer Batterie, d.h. funktionsunfähigem Anlasser, nach Abstellen über die Stoptaste 66 auch durch Anschieben des Fahrzeugs in Betrieb gesetzt werden, wobei lediglich das Gaspedal 45 betätigt werden muss, damit die Zündschaltung 30 in Betrieb gesetzt wird. Es versteht sich, dass der Schalter 80 so ausgeführt ist, dass er bei leerer Batterie geschlossen ist.

Es versteht sich, dass die Bedingungen, unter denen ein Abstellen des Motors mittels der Stoptaste 24 und ein Anlassen mittels des Gaspedals 45 und des Kupplungspedals 46 möglich ist, in mannigfaltiger Weise geändert werden können. Ebenso versteht sich, dass die der Einfachheithalber als Selbsthalterelais bzw. Relais dargestellten Bausteine durch vollelektronische Bausteine wie mono- und/oder bistabile Flip-Flops oder ähnliche Schaltkreise ersetzt werden können.

**Patentansprüche**

1. Stop-Start-Vorrichtung für einen Fahrzeugverbrennungsmotor, mit einem Zündschalter (4), einem Anlasserstromkreis und einem Motorbetriebserkennungsschalter (20), welcher bei einem vorbestimmten Betriebszustand des Motors den Anlasserstromkreis unterbricht, einer Stoptaste (66), deren Betätigung eine Motorbetriebsunterbrechungsschaltung (28) in einen den Betrieb des Motors unterbrechenden Zustand versetzt, und einer Starttasteneinrichtung (45, 46), welche die Motorbetriebsunterbrechungsschaltung (28) rücksetzt und den Anlasserstromkreis schliesst, gekennzeichnet durch eine Bereitschaftsschaltung (Bereitschaftsrelais 36) welche die Starttasteneinrichtung (45, 46) nach gleichzeitigem Vorliegen der Bedingungen "Zündschalter (4) geschlossen" und "vorbestimmter Betriebszustand des Motors zum Betätigen des Motorbetriebserkennungsschalters (20) erreicht" in Funktionsbereitschaft setzt.

2. Vorrichtung nach Anspruch 1, dadurch gekennzeichnet, dass die Bereitschaftsschaltung einen Selbsthaltekontakt (38) aufweist, welcher bei geschlossenem Zündschalter (4) und Erreichen des vorbestimmten Motorbetriebszustandes schliesst und erst nach Öffnen des Zündschalters öffnet.

3. Vorrichtung nach Anspruch 1 oder 2, dadurch gekennzeichnet, dass in Reihe mit der Starttasteneinrichtung (45, 46) ein Motorstillstandserkennungsschalter (Öldruckschalter 42) geschaltet ist, der unter einer Drehzahl des Motors schliesst, bei der der Motorbetriebserkennungsschalter (20) anspricht.

4. Vorrichtung nach einem der Ansprüche 1 bis 3, dadurch gekennzeichnet, dass eine den Motorstillstandserkennungsschalter (Öldruckschalter) überbrückende Schaltung (Überbrückungsrelais 50) vorgesehen ist, welche beim Schliessen des Motorstillstandserkennungsschalters schliesst und bei Erreichen des vorbestimmten Motorbetriebszustandes öffnet und welche in Reihe mit der Starttasteneinrichtung (45, 46) liegt.

5. Stop-Start-Vorrichtung für einen Fahrzeugverbrennungsmotor, mit einem Zündschalter (4), einem Anlasserstromkreis und einem Motorbetriebserkennungsschalter (20), welcher bei einem vorbestimmten Betriebszustand des Motors den Anlasserstromkreis unterbricht, einer Stoptaste (66), deren Betätigung eine Motorbetriebsunterbrechungsschaltung (28) in einen den Betrieb des Motors unterbrechenden Zustand versetzt, und einer Starttasteneinrichtung (45, 46), welche die Motorbetriebsunterbrechungsschaltung (28) rücksetzt und den Anlasserstromkreis schliesst, gekennzeichnet durch eine Anlasserbetätigungsschaltung (86, 88, 92), welche nach einem Abstellen des Motors mittels der Stoptaste (66) oberhalb einer bestimmten Geschwindigkeit des Fahrzeugs den Anlasserstromkreis (10, 12) schliesst.

6. Vorrichtung nach Anspruch 5, dadurch gekennzeichnet, dass die Anlasserbetätigungsschaltung ein über die Stoptaste (66) erregbares Relais (92) enthält, welches im erregten Zustand einen in Reihe mit einem Schalter (88) geschalteten Kontaktsatz schliesst, welcher Schalter (88) oberhalb der bestimmten Fahrzeuggeschwindigkeit schliesst.

## Claims

1. Stop-start device for a vehicle internal-combustion engine, with an ignition switch (4), a starter circuit and an engine-operation recognition switch (20) which breaks the starter circuit in a predetermined operating state of the engine, a stop button (66), the actuation of which transfers an engine-operation interruption circuit (28) into a state interrupting the operation of the engine, and a start-button device (45, 46) which resets the engine-operation interruption circuit (28) and closes the starter circuit, characterised by a stand-by circuit (stand-by relay 36) which puts the start-button device (45, 46) on operational stand-by when the conditions "Ignition switch (4) closed" and "Predetermined operating state of the engine for actuating the engine-operation recognition switch (20) obtained" are present simultaneously.

2. Device according to claim 1, characterised in that the stand-by circuit has a self-locking contact (38) which closes when the ignition switch (4) is closed and when the predetermined engine operating state is obtained, and opens only after the ignition switch has opened.

3. Device according to claim 1 or 2, characterised in that connected in series with the start-button device (45, 46) is an engine-stoppage recognition switch (oil-pressure switch 42) which closes below an engine speed at which the engine-operation recognition switch (20) responds.

4. Device according to one of claims 1 to 3, characterised in that there is a circuit (bridging relay 50) which bridges the engine-stoppage recognition switch (oil-pressure switch) and which closes when the engine-stoppage recognition switch closes, and opens when the predetermined engine operating state is obtained, and which is in series with the start-button device (45, 46).

5. Stop-start device for a vehicle internal-combustion engine, with an ignition switch (4), a starter circuit and an engine-operation recognition switch (20) which breaks the starter circuit in a predetermined operating state of the engine, a stop button (66), the actuation of which transfers an engine-operation interruption circuit (28) into a state interrupting the operation of the engine, and a start-button device (45, 46) which resets the engine-operation interruption circuit (28) and closes the starter circuit, characterised by a starter actuation circuit (86, 88, 92) which, after the engine has been switched off by means of the stop button (66), closes the starter circuit (10, 12) above a specific speed of the vehicle.

6. Device according to claim 5, characterised in that the starter actuation circuit contains a relay (92) which can be energised via the stop button (66) and which, in the energised state, closes a contact set connected in series with a switch (88), this switch (88) closing above the specific vehicle speed.

## Revendications

1. Dispositif d'arrêt-démarrage pour moteur à combustion interne de véhicule, comprenant un interrupteur d'allumage (4), un circuit de démarrage et un interrupteur-détecteur de marche du moteur (20) qui interrompt le circuit de démarrage lorsque le moteur est dans un état de marche prédéterminé, une touche d'arrêt (66) dont la manœuvre met un circuit d'interruption de marche (28) dans un état où il interrompt la marche du moteur, et un dispositif de touche de démarrage (45, 46) qui remet en l'état initial le circuit d'interruption de marche du moteur (28) et ferme le circuit de démarrage, caractérisé par un circuit de validation (relais de validation 36) qui met le dispositif de la touche de démarrage (45, 46) en mesure de fonctionner après que sont satisfaites en même temps les conditions «Interrupteur d'allumage (4) fermé» et «Le moteur a atteint son état de marche prédéterminé pour l'actionnement de l'interrupteur-détecteur de marche du moteur (20)».

2. Dispositif selon la revendication 1, caractérisé en ce que le circuit de validation comporte un contact de maintien (38) qui se ferme lorsque l'interrupteur d'allumage (4) est fermé et que l'état de marche prédéterminé du moteur est atteint et qui ne s'ouvre qu'après l'ouverture de l'interrupteur d'allumage.

3. Dispositif selon l'une des revendications 1 ou 2, caractérisé en ce qu'il est monté, en série avec le dispositif de la touche de démarrage (45, 46), un interrupteur-détecteur d'arrêt du moteur (interrupteur à pression d'huile 42) qui se ferme au-dessous d'une vitesse de rotation du moteur à laquelle réagit l'interrupteur-détecteur de marche du moteur (20).

4. Dispositif selon l'une quelconque des revendications 1 à 3, caractérisé en ce qu'il est prévu un circuit (relais de shuntage 50) qui shunte l'interrupteur-détecteur d'arrêt du moteur (interrupteur à pression d'huile), qui se ferme lors de la fermeture de l'interrupteur-détecteur d'arrêt du moteur et qui s'ouvre lorsque est atteint l'état de marche prédéterminé du moteur, ce circuit de shuntage étant en série avec le dispositif de la touche de démarrage (45, 46).

5. Dispositif d'arrêt-démarrage pour moteur à combustion interne de véhicule, comprenant un interrupteur d'allumage (4), un circuit de démarrage et un interrupteur-détecteur de marche du moteur (20) qui interrompt le circuit de démarrage lorsque le moteur est dans un état de marche prédéterminé, une touche d'arrêt (66) dont la manœuvre met un circuit d'interruption de marche (28) dans un état où il interrompt la marche du moteur, et un dispositif de touche de démarrage (45, 46) qui remet en l'état initial le circuit d'interruption de marche du moteur (28) et ferme le circuit de démarrage, caractérisé par un circuit d'actionnement du démarreur (86, 88, 92) qui, à la suite d'un arrêt du moteur au moyen de la touche d'arrêt (66), ferme le circuit de démarrage (10, 12) au-dessus d'une vitesse déterminée du véhicule.

6. Dispositif selon la revendication 5, caractérisé en ce que le circuit d'actionnement du démarreur contient un relais (92) qui est excitable au moyen de la touche d'arrêt (66) et qui, à l'état excité, ferme un jeu de contacts monté en série avec un interrupteur (88), interrupteur (88) qui se ferme au-dessus de la vitesse déterminée du véhicule.